# EUROPÄISCHE PATENTSCHRIFT

(11) **EP 1 031 540 B1**
(45) Veröffentlichungstag und Bekanntmachung des Hinweises auf die Patenterteilung: **30.06.2004**
(21) Anmeldenummer: 00103417.2
(22) Anmeldetag: 25.02.2000
(51) Int. Cl.: C02F 3/12

(54) **Vorrichtung zum Behandeln von Abwasser**
Apparatus for water treatment
Appareil de traitement de l'eau

(30) Priorität: 25.02.1999 DE 19907980
(43) Veröffentlichungstag der Anmeldung: 30.08.2000
(73) Patentinhaber: Baumann, Markus, 32602 Vlotho (DE)
(72) Erfinder: Baumann, Markus, 32602 Vlotho (DE)
(74) Vertreter: TER MEER STEINMEISTER & PARTNER GbR

(56) Entgegenhaltungen:
- EP-A- 0 557 922
- DE-A- 3 702 425
- GB-A- 2 317 168
- US-A- 3 834 536
- US-A- 5 186 821

## Beschreibung

Die Erfindung betrifft eine Vorrichtung zum Behandeln von Abwasser in Kleinkläranlagen und kleinen Kläranlagen, die einen Klärbehälter in der Form eines Dreikammerbehälters mit inneren senkrechten Trennwänden aufweisen, mit einer Anzahl von Aggregaten einschließlich eines Belüfters, einer Klarwasser-Entnahmepumpe und einer Schlammpumpe.

Der Begriff "Kleinkläranlagen" soll im folgendene stellvertretend für beide zuvorgenannten Größen von Kläranlagen verwendet werden.

Kleinkläranlagen weisen zumeist ein Vorklärbecken, ein Pufferbecken und ein Behandlungsbecken auf, in dem die eigentliche biologische Klärung stattfindet. Vorklärbecken und Pufferbecken können eine Einheit bilden. Es soll daher im folgenden bei derartigen Fällen nur noch von Vorklärbecken gesprochen werden. Zunächst war es überwiegend üblich, das Vorklärbecken und das Behandlungsbecken als räumlich getrennt, gesonderte Behälter auszubilden. Naturgemäß ist eine derartige Lösung aufwendig, und sie hat einen nicht unerheblichen Platzbedarf. Üblich sind daher auch sogenannte Dreikammerbecken, bei denen innerhalb eines gemeinsamen Behälters drei gesonderte Kammern ausgebildet sind.

In der DIN 4261, Teil 2 sowie in ATV A 122 und M 210 (Merkblätter des Abwassertechnischen Vereins) werden Kleinkläranlagen beschrieben, die zur sogenannten vollbiologischen Reinigung verwendet werden. Diese Anlagen weisen Mehrkammergruben als Vorklärbecken auf, denen in der Regel ein weiterer Behälter nachgeschaltet wird, indem sich die eigentliche biologische Reinigungsstufe befindet. Oft wird auch in den Behälter der Mehrkammergrube eine biologische Reinigungsstufe integriert. Zu diesem Zweck wird in der Regel ein sogenanntes Festbettsystem verwendet, bei dem Festkörper in die entsprechende Kammer eingesetzt werden, an denen sich Mikroorganismen absetzen, die die Schmutzteile aus dem Abwasser abbauen.

Die U.S.-Patentschrift 3,834,536 zeigt und beschreibt einen Klärbehälter mit einer Belüftungskammer, einer Absetzkammer innerhalb der Belüftungskammer. und einer Pumpe, die Flüssigkeit aus der Belüftungskammer in die Absetzkammer transportiert. Eine weitere Pumpe pumpt überflüssiges Wasser aus dem Behälter.

Der Erfindung liegt die Aufgabe zugrunde, eine Kleinkläranlage zu schaffen, die unter Verwendung herkömmlicher Mehrkammer-, insbesondere auch Dreikammerbehälter in einfacher Weise für einen biologischen Klärbetrieb ausgerüstet werden kann.

Diese Aufgabe wird durch eine Vorrichtung gemäß Anspruch 1 gelöst.

Durch das Einhängen der Aggregate von oben und insbesondere die Zusammenfassung mehrerer Aggregate an einem gemeinsamen Rahmen wird der Betrieb der Anlage in Bezug auf Wartung und Pflege erheblich vereinfacht. Während bei vielen heutigen Kleinkläranlagen Aggregate, wie Belüfter, Pumpen, etc. einzeln eingesetzt und teilweise bis zum Boden des jeweiligen Behälters herabgelassen werden, ist erfindungsgemäß nur der Einbau einer einzigen Halterung notwendig. Naturgemäß schließt die Zusammenfassung mehrerer Aggregate nicht aus, daß im einzelnen Fall zusätzlich einzelne weitere Aggregate gesondert eingesetzt werden.

Insbesondere bei Klärbehältern in der Form von Dreikammerbehältern, die zumeist als zylindrische Kammern mit Trennwänden ausgebildet sind, können die einzelnen Aggregate mithilfe eines gemeinsamen Rahmens auf die Trennwände aufgesetzt oder aufgehängt werden. Diese Möglichkeit kann insbesondere genutzt werden, wenn Dreikammerbehälter auf die erfindungsgemäß vorgesehene Verfahrensweise umgerüstet werden sollen. Grundsätzlich wären in diesen Fällen wenigstens vier Aggregate erforderlich, nämlich eine Klarwasser-Entnahmepumpe, eine Überschußschlammpumpe, im folgenden vereinfacht Schlammpumpe genannt, ein Tauchbelüfter und eine weitere Pumpe, die zulaufendes Abwasser aus dem Vorklärbecken in das Behandlungsbecken oder Nachklärbecken überführt. Derartige Pumpen sind jedoch verhältnismäßig teuer und im übrigen pflegebedürftig sowie störungsanfällig.

Erfindungsgemäß wird daher die Schlammpumpe zugleich so eingerichtet, daß sie die Überführung des frischen Klärwassers aus dem Vorklärbecken in das Behandlungsbecken bewirkt. Dies kann in der Art geschehen, daß an den Ausgang der Schlammpumpe eine Ausgangsleitung angesetzt ist, die von der Seite des Behandlungsbeckens über die Trennwand hinweg in das Vorklärbecken geführt ist. Mit dieser Leitung kann Wasser aus dem Vorklärbecken unter Verwendung des Prinzips der kommunizierenden Röhren in das Behandlungsbecken überführt werden, wie später näher erläutert werden soll.

Weitere Merkmale und Vorteile der Erfindung ergeben sich aus den Unteransprüchen.

Im folgenden werden bevorzugte Ausführungsbeispiele der Erfindung anhand der beigefügten Zeichnungen erläutert.
- Fig. 1: ist ein senkrechter Schnitt durch eine Ausführungsform einer Klärvorrichtung;die ausserhalb des Rahmens der Erfindung liegt ;
- Fig. 2: ist ein entsprechender Schnitt und veranschaulicht den Nachtbetrieb;
- Fig. 3: ist eine vergrößerte Darstellung des oberen Bereichs in Fig. 1;
- Fig. 4: ist ein senkrechter Schnitt durch eine erfindungsgemäße Vorrichtung bei Anwendung in Verbindung mit einem herkömmlichen Dreikammerbehälter;
- Fig. 5: ist ein senkrechter Schnitt ähnlich Fig. 4;
- Fig. 6: ist ein waagerechter Schnitt zu Fig. 4 und 5;
- Fig. 7: zeigt eine Anlage mit einem Dreikammerbehälter ähnlich Fig. 4, jedoch in einer anderen Ausführungsform;
- Fig. 8: ist ein senkrechter Schnitt ähnlich Fig. 7, jedoch in einer um 90° versetzten Ebene;
- Fig. 9: ist eine Draufsicht zu Fig. 7 und 8.

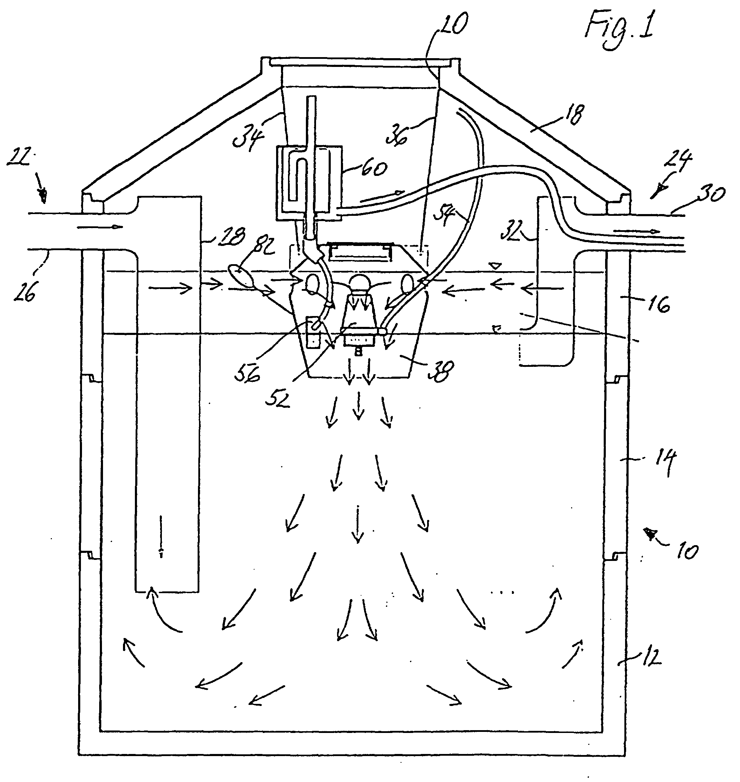

In Fig. 1 ist ein senkrechtstehender Behälter mit 10 bezeichnet. Der Behälter ist zusammengesetzt aus einem zylindrischen Bodenteil 12, zwei auf dieses aufsetzbaren Ringen 14,16 und einem auf den Ring 16 aufsetzbaren, nach oben konisch zusammenlaufenden Kopfstück 18, in dessen Zentrum eine Öffnung 20 vorgesehen ist. Die Öffnung 20 wird normalerweise mit einem Deckel verschlossen. Sie ist in der Regel so bemessen, daß ein Monteur in den Behälter einsteigen kann und daß die benötigten Aggregate in den Behälter herabgelassen und montiert werden können. Das Bodenteil 12, die Ringe 14,16 und das Kopfstück 18 bestehen üblicherweise aus Beton. Es gibt jedoch auch entsprechende Behälter, die einstückig aus Kunststoff hergestellt sind. Derartige Behälter sind in großem Umfang bekannt und als solche nicht Gegenstand der vorliegenden Darstellung. Die gezeigte Ausführungsform bezieht sich somit auf eine Einbecken-Anlage.

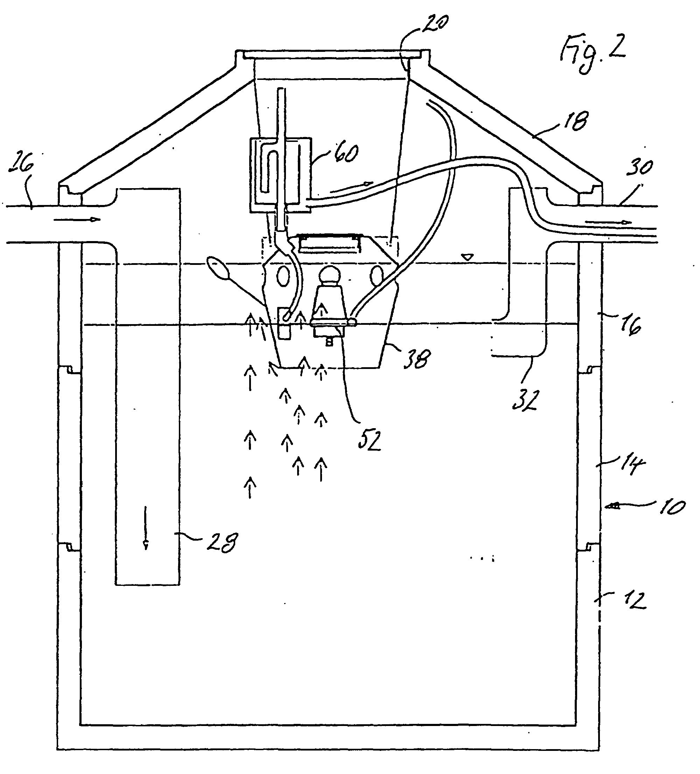

Auf der linken Seite in Fig. 1 und 2 tritt ein Zulauf 22 ein, und auf der rechten Seite tritt ein Ablauf 24 aus. Der Zulauf 22 setzt sich zusammen aus einem waagerecht eintretenden Rohr 26 und einem an dieses anschließenden, senkrechten, oben und unten offenen, tief in das Abwasser eintauchenden Tauchrohr 28, das die Bewegung des eintretenden frischen Abwassers auffängt und dämpft und ein langsames Absinken in den Behälter ermöglicht. Der Ablauf 24 umfaßt ein waagerechtes, aus dem Behälter austretendes Rohr 30 und ein senkrechtes, diesem vorgeschaltetes Tauchrohr 32, in das nur Wasser aus dem Bereich unterhalb des Flüssigkeitsspiegels eintreten kann, so daß verhindert wird, daß Schwimmschlamm von der Oberfläche durch den Ablauf 24 austreten kann. Der Ablauf 24 hat hier im wesentlichen die Funktion eines Notüberlaufs, da das in dem Behälter enthaltene Wasser normalerweise in der Form von Klarwasser über eine Pumpe abgepumpt wird, wie anschließend erläutert werden soll.

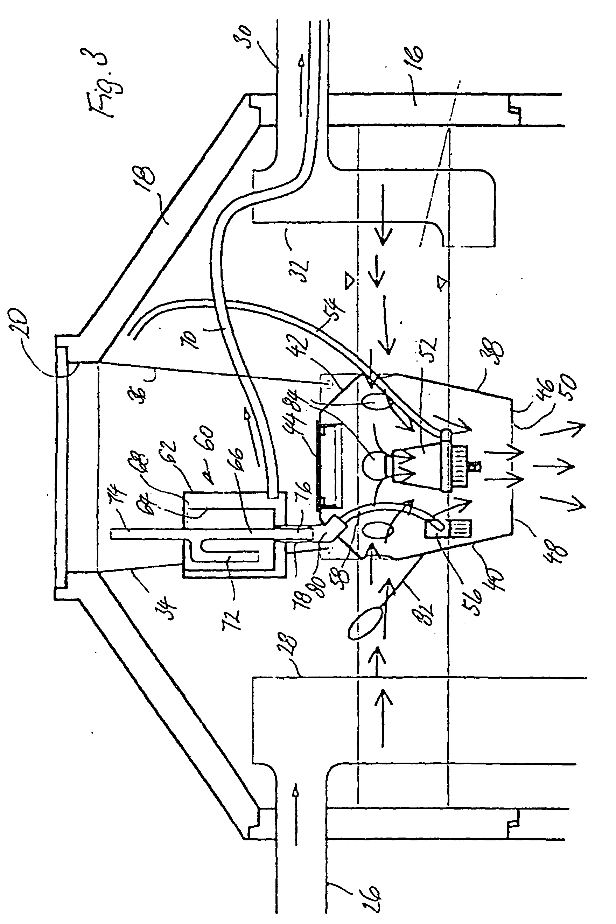

Unterhalb der Öffnung 20 befindet sich ein an Ketten 34,36 am Rand der Öffnung 20 aufgehängter Rahmen 38, der zylindrisch, rechteckig oder im Prinzip von der Form her beliebig ausgebildet sein kann. Bei der dargestellten Ausführungsform gemäß Fig. 1 und 2 ist der Rahmen zylindrisch mit einem konisch nach unten zusammenlaufenden, unteren Abschnitt 40 und einem konisch nach oben zusammenlaufenden oberen Abschnitt 42 (Fig. 3). Im Zentrum des oberen konischen Abschnitts 42 befindet sich ein Deckel 44. Teilweise ist bei dieser Ausführungsform der Rahmen zu einem Gehäuse durch Wände geschlossen.

Der mit 46 bezeichnete Boden besteht im wesentlichen aus einem flanschförmigen Randstreifen 48 und einer zentralen Öffnung 50. Über der Öffnung 50 befindet sich in der senkrechten Mittelachse des insgesamt zylindrischen Gehäuses 38 ein Tauchbelüfter 52, der über einen nach außen geführten Schlauch 54 Luft aufnimmt und ein Wasser-Luft-Gemisch mit einer nicht dargestellten Förderschraube senkrecht nach unten durch die Öffnung drückt. Auf diese Weise wird nicht nur Luft in das Wasser eingetragen, sondern der starke Wasser-Luft-Strom dient auch dazu, das Absetzen von Schlamm während der Belebungsphase, also normalerweise am Tage zu verhindern. Der Tauchbelüfter übernimmt also zugleich die Funktion eines Rührwerks.

In einer seitlichen Position innerhalb des Rahmens befindet sich eine Klarwasser-Entnahmepumpe 56. Die Entnahmepumpe 56 befindet sich auf diese Weise oberhalb des umlaufenden Randstreifens 48 des Bodens 46, so daß aufsteigender Schwimmschlamm nicht in die Entnahmepumpe 56 gelangen kann, wie Fig. 2 erkennen läßt.

Die Entnahmepumpe 56 ist über eine Leitung 58 mit einem Probenbehälter 60 verbunden, der aus einem Außenbehälter 62 und einem herausnehmbaren Innenbehälter 64 besteht. Der Innenbehälter kann über die Leitung 58 und ein an die Leitung nach oben anschließendes Rohr 66 Klarwasser aufnehmen. Aus dem Innenbehälter gelangt das klare Wasser über einen Überlauf 68 am oberen Rand des Innenbehälters 64 in den Außenbehälter 62 und über diesen über eine Leitung 70 nach außen. Die Leitung 70 ist bei der dargestellten Ausführungsform durch das oben offene Ende des Tauchrohres 32 in das waagerecht austretende Rohr 30 des Ablaufs 24 hineingeführt. Das Wasser gelangt über die Leitung 70 in einen Schönungsteich, einen Vorfluter oder dergleichen.

Das Rohr 66, über das das Klarwasser mit Hilfe der Klarwasserpumpe 56 in den Innenbehälter 64 gepumpt wird, ist umgekehrt-U-förmig gebogen und umfaßt einen nach unten laufenden Schenkel 72, der mit Abstand zum Boden des Innenbehälters 64 endet. Dadurch wird erreicht, daß das Klarwasser in den Innenbehälter 64 aus gewisser Höhe herabfällt und damit verhindert, daß sich in dem Probengefäß Schlamm ansammelt. Es wird daher gewährleistet, daß der Inhalt des Innenbehälters des Probengefäßes stets durchgespült wird, so daß am Ende der Klarwasser-Entnahmephase weitgehend klares und für den Zustand des Wassers repräsentatives Wasser zur Entnahme einer Probe zurückbleibt.

Das Rohr 66 weist im übrigen eine nach oben gerichtete, senkrechte Verlängerung 74 auf, durch die verhindert wird, daß der Innenbehälter 64 leergesaugt wird, wenn die Entnahmepumpe 56 abgeschaltet wird. Die Verlängerung 74 kann zugleich als Handgriff gestaltet sein, mit dessen Hilfe das gesamte Rohr 66 und der Innenbehälter 64 durch die obere Öffnung 20 herausgenommen werden können, wenn eine Probenentnahme ansteht. Das Rohr 66 ist mit dem Boden des Innenbehälters 64 fest und dicht verbunden.

Anstelle der zuvor dargestellten Lösung kann auf das Rohr 66 auch ein am oberen Ende geschlossenes Mantelrohr aufgesetzt sein, das das Rohr 66 umgibt und in Abstand zu dem Boden des Innenbehälters 64 endet. Damit der Innenbehälter am Ende der Klarwasserabgabe nicht leergesaugt wird, kann das Mantelrohr im oberen Bereich Belüftungsöffnungen aufweisen. Die Gestaltung des Probengefäßes ermöglicht also einige Varianten. Gewährleistet sein sollte in jedem Falle die Funktion, daß das Klarwasser zunächst aus gewisser Höhe auf den Boden des Innenbehälters 64 herabgelassen wird, damit die Ansammlung von Schlamm vermieden wird und stets eine Probe zur Verfügung steht, die für den Zustand des Klarwassers bei Verlassen der Anlage repräsentativ ist.

Das Rohr 66 erstreckt sich nach unten über den nicht bezeichneten Boden des Innenbehälters 64 hinaus und kann mit dieser Verlängerung 76 in ein durch den Boden des Außenbehälters 62 nach oben hindurchtretendes Führungsrohr 78 eingeschoben werden, das das obere Ende eines Übergangsstücks 80 bildet. Dieses Übergangsstück 80 ist in der Wand des oberen konischen Abschnitts 42 des Gehäuses 38 befestigt und bildet den Übergang zwischen der Leitung 58 innerhalb des Gehäuses 38 und dem oberen Führungsrohr 78, an dem der Außenbehälter 62 des Probenbehälters befestigt ist. Dies ist im einzelnen in Fig. 1 und 2 und insbesondere in Fig. 3 erkennbar. Durch Einschieben der unteren Verlängerung 76 des Rohres 66 in das Führungsrohr 78 gelangen das Rohr 66 und der Innenbehälter 64 in eine in bezug auf das Gehäuse 38 festgelegte Position, in der sie lösbar gehalten werden.

In Fig. 1 bis 3 ist im übrigen ein Schwimmer 82 schematisch angedeutet, der zu einem nicht dargestellten Schwimmerschalter gehört. Auf diese Weise können die Füllstände im Behälter überwacht und gegebenenfalls durch Betätigung der Entnahmepumpe 56 bzw. einer nicht dargestellten Abwasser-Zufuhrpumpe gesteuert werden.

Wie insbesondere in Fig. 1 und 3 zu erkennen ist, befinden sich in den Wänden des Rahmens 38 am Übergang zwischen dem unteren konischen Abschnitt 40 und dem oberen konischen Abschnitt 42 auf dem Umfang verteilte Fenster 84, die im wesentlichen in der Höhe der Wasseroberfläche und damit in der Höhe des Schwimmschlammes liegen. Wenn daher der Tauchbelüfter 52 läuft, wird entsprechend den in Fig. 1 und 3 dargestellten Pfeilen Obeflächenwasser und damit Schwimmschlamm durch die Fenster 84 in das Gehäuse 38 gezogen und zusammen mit dem Wasser-Luft-Strahl durch den Tauchbelüfter nach unten zum Boden des Behälters gedrückt. Auf diese Weise kann die Bildung von übermäßigem Schwimmschlamm wirksam unterdrückt werden.

Fig. 1 entspricht im wesentlichen der Situation gegen Ende des Tagesbetriebes. Wie die Pfeile andeuten wird nach wie vor ein Wasser-Luft-Strom mit Hilfe des Tauchbelüfters 52 in Richtung des Behälterbodens geleitet, während andererseits der in Fig. 1 bis 3 dargestellte obere Füllstand im wesentlichen erreicht ist. Gegen Ende des Tages wird der Tauchbelüfter 52 abgeschaltet. Damit kommt die Bewegung innerhalb des Abwassers zur Ruhe, so daß sich feste Partikel absetzen können und im oberen Bereich eine Klarwasserzone entsteht. Durch den starken Lufteintrag während des Tagesbetriebes hat eine aerobe Klärung stattgefunden. Wenn die Ruhephase beendet ist, wird die obere Klarwasserschicht durch die Entnahmepumpe 56 bis zu dem unteren Grenzniveau entsprechend der unteren Füllstandslinie in Fig. 3, die im wesentlichen in Höhe der Entnahmepumpe 56 liegt, über den Probenbehälter 60 und die Leitung 70 nach außen abgepumpt. Die Anlage ist so zu dimensionieren, daß die entnommene Menge zwischen den beiden in Fig. 3 dargestellten Pegelständen dem üblicherweise bei Tage auftretenden Abwasserzulauf entspricht.

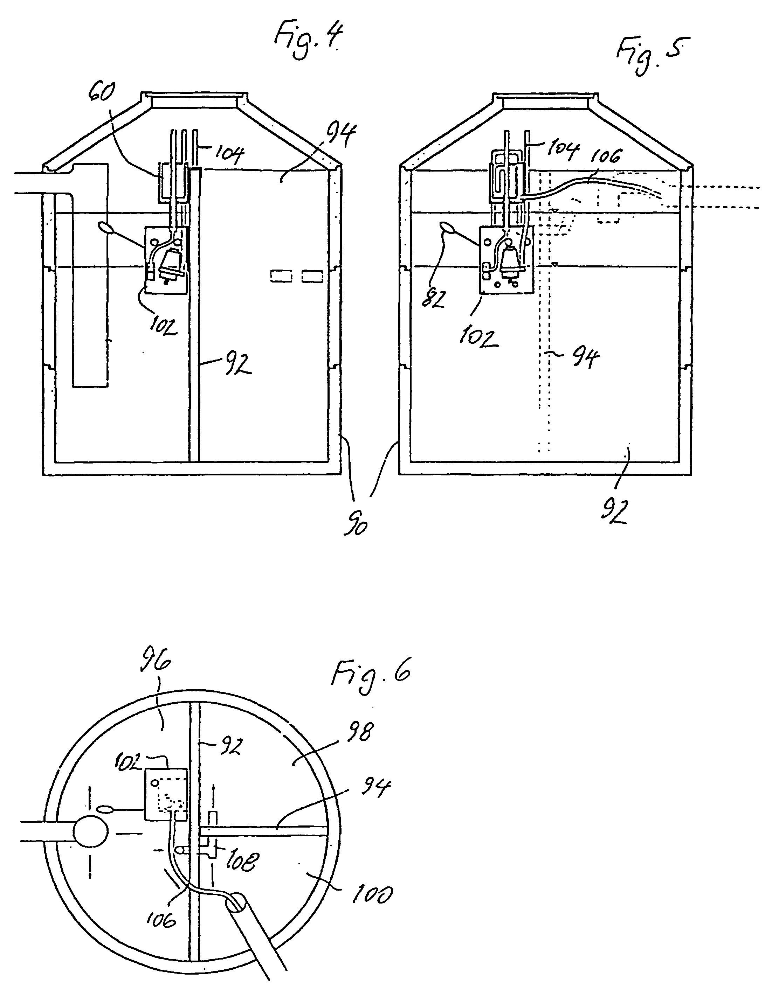

Fig. 4 bis 6 zeigen einen herkömmlichen Dreikammerbehälter in zwei senkrechten und einem waagerechten Schnitt. Der Behälter kann im Wege der Nachrüstung durch eine erfindungsgemäße Geräte-Einheit ergänzt werden. Der mit 90 bezeichnete Behälter entspricht hinsichtlich seines äußeren Umrisses und seiner Form dem Behälter 10 gemäß Fig. 1 bis 3, ist jedoch in seinem Inneren durch eine senkrechte Trennwand 92 in zwei gleich große Hälften unterteilt, deren eine durch eine weitere Trennwand 94 noch einmal in zwei Kammern von etwa einem Viertel der Gesamtgröße des Behälters unterteilt ist. Dadurch entstehen eine erste Kammer 96 mit einem Umfangswinkel von 180° sowie eine zweite und dritte Kammer 98,100 mit einem Umfangswinkel von ca. 90°.

Die erste Kammer 96 übernimmt die Funktion des Behälters 10 gemäß Fig. 1 bis 3. Die beiden weiteren Kammern 98,100 dienen zum Sammeln von überschüssigem Schlamm. In diesem Falle ist ein quaderförmiger Rahmen 102 vorgesehen, das wie bei der ersten Ausführungsform einen Tauchbelüfter 52 und eine Klarwasser-Entnahmepumpe 56 aufweist. Wie bei der ersten Ausführungsform ist auch ein Schwimmerschalter 82 vorgesehen. Eine Leitung 104 dient zum Ansaugen von Luft, eine weitere Leitung 106 zur Abgabe des Klarwassers. Die Anordnung und Halterung des Probenbehälters 60 an dem Gehäuse entspricht der ersten Ausführungsform. Fig. 4 läßt erkennen, daß die gesamte Einheit mit einem nicht bezeichneten Haken an der Trennwand 92 derart aufgehängt ist, daß der Rahmen 102 in das Abwasser in der größeren Kammer 96 eintaucht. Der obere und untere Wasserspiegel, die sich bei Normalbetrieb einstellen, sind in Fig. 4 und 5 eingezeichnet. Es ist erkennbar, daß der Wasserspiegel während der Nachtphase etwa bis in Höhe der Klarwasser-Entnahmepumpe absinkt und während des Tages bei entsprechendem Zulauf bis zu der oberen in Fig. 4 und 5 angegebenen Linie ansteigt.

Die Funktion entspricht derjenigen der Ausführungsform gemäß Fig. 1 bis 3. Die beiden kleineren Kammern 98 und 100 dienen zur Aufnahme von Schlamm, der aus der Kammer 96 in die Kammern 98 und 100 mit Hilfe eines Überleitungssystems 108 geführt wird.

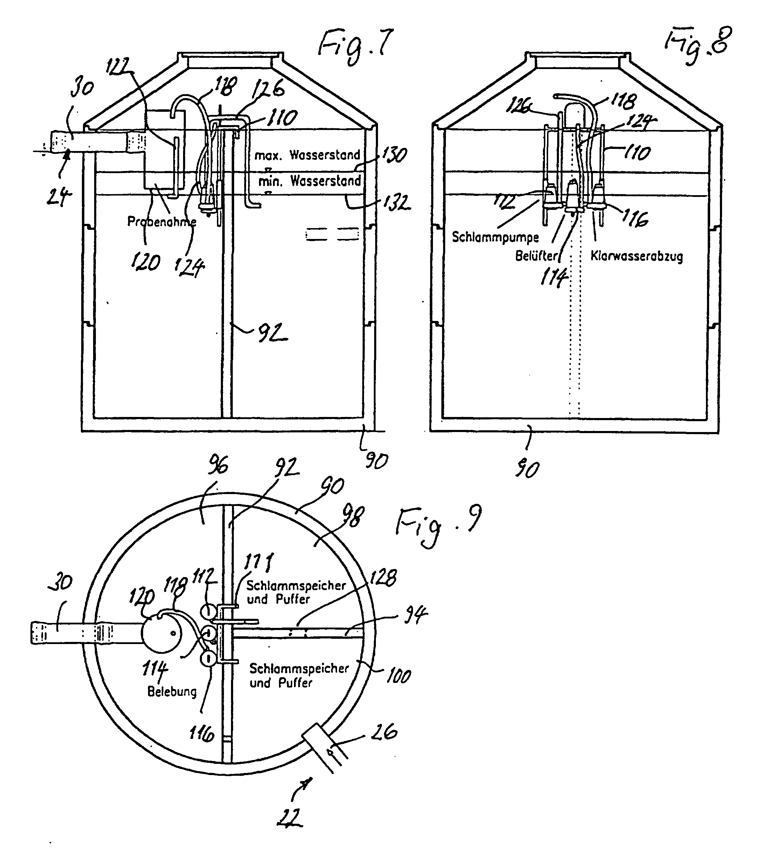

Anschließend soll unter Bezugnahme auf Fig. 7 bis 9 eine weitere Ausführungsform der Erfindung beschrieben werden, die sich ebenso wie die Ausführungsform gemäß Fig. 4 bis 6 zur Ausrüstung oder Nachrüstung eines Dreikammerbehälters eignet.

An der den Behälter 90 in zwei gleiche Teile teilenden Trennwand 92 hängt ein Rahmen 110, der von oben auf die Trennwand 92 aufgehängt werden kann und alle wesentlichen Aggregate der Anlage trägt. An dem Rahmen 110 befinden sich im einzelnen eine Schlammpumpe 112, ein Tauchbelüfter 114 und eine Klarwasser-Entnahmepumpe 116. Die Klarwasser-Entnahmepumpe ist über eine Leitung 118 mit einen Probenbehälter 120 verbunden, der seinerseits mit dem Rohr 30 auf der Seite des Ablaufs 24 in Verbindung steht. Das Klarwasser wird daher über die Leitung 118 in den Probenbehälter 120 gepumpt und tritt von hier aus durch den Ablauf 24 aus. Durch den Boden des Probenbehälters 120 tritt von unten ein Standrohr 122 ein. Dieses Standrohr 122 dient als Notüberlauf für den Fall, daß das Abwasser im Behälter über die obere Höhe des Standrohres ansteigen sollte.

Der Tauchbelüfter hat die bereits beschriebene Funktion, einen nach unten gerichteten Luft-Wasser-Strom abzugeben, der im wesentlichen bis zum Boden des Behälters 90 vordringt. Der Tauchbelüfter 114 nimmt von außen zugeführte Luft über eine Leitung 124 auf.

Die Schlammpumpe 112 pumpt Schlammwasser über eine umgekehrt U-förmige Leitung 126 zurück in eine der beiden kleineren Kammern, im dargestellten Beispiel Kammer 98. Sie dient im übrigen dazu, über den Zulauf 22 in die Kammer 100 eingetretenes und von dieser in die Kammer 98 gelangtes frisches Schmutzwasser in die größere Kammer 96 zu übernehmen. Die beiden kleineren Kammern 98 und 100 sind durch die Wand 94 hindurch durch lediglich angedeutete Öffnungen 128 verbunden.

Frisches Schmutzwasser, das über den Zulauf 22 in die Kammer 100 eintritt und sich von dieser aus in den beiden kleineren Kammern 98 und 100 verteilt, wird hier zunächst zurückgehalten, so daß sich feste Schlammteile absetzen und am Boden sammeln können. Die Kammern 98 und 100 dienen daher als Schlammspeicher und im übrigen als Puffer für zulaufendes Wasser. In den Kammern 98 und 100 wird zulaufendes Schmutzwasser gesammelt, während in der großen Kammer 96 ein biologischer Klärvorgang abläuft.

Die Anlage arbeitet nach Belebtschlammprinzip im Aufstauverfahren. Dabei werden die Schmutzstoffe aus dem Abwasser von schwebenden Mikroorganismen (Belebtschlamm) aufgenommen und in Biomasse umgewandelt. Dies soll im anschließenden Teil der Beschreibung näher erläutert werden.

Das eigentliche Klärverfahren findet in der größeren Kammer 96 statt. Hier wird jeweils periodisch eine Belüftung mit Hilfe des Tauchbelüfters 114 durchgeführt. der den für eine aerobe Klärung notwendigen Sauerstoff einträgt. Sodann tritt jeweils für einen weiteren Zeitraum eine Absetzphase ein, in der das Wasser in der Kammer 96 in Ruhe gehalten wird und Schlammteile absinken können. Wenn das Wasser den höheren Pegel 130 erreicht hat, wird Klarwasser am Ende der Absetzphase in der bereits beschriebenen Weise abgepumpt, bis der untere Pegel 132 erreicht ist. Sodann wird frisch zugelaufenes Wasser aus den Kammern 98,100 in die Behandlungskammer 96 überführt. Dies geschieht dadurch. daß mit Hilfe der Schlammpumpe 112 ein kurzer Pumpenstoß abgegeben wird. der die Leitung 126 vollständig mit Wasser füllt. Wenn die Pumpe 112 wieder abgeschaltet wird, wird über die mit Wasser gefüllte Leitung 126 das Abwasser aus den Kammern 98,100 nach dem Prinzip der kommunizierenden Röhren in die Behandlungskammer 96 herübergezogen. Dies geschieht somit ohne Energieverbrauch. Wenn im wesentlichen ein gleicher Pegel in allen drei Kammern erreicht ist, beginnt in der Behandlungskammer 26 wiederum ein Klärvorgang mit den beschriebenen zwei Phasen.

Zunächst wird der Tauchbelüfter 114 eingeschaltet. Unterhalb der Schlammpumpe 112 befindet sich eine nach unten offene, nicht im einzelnen dargestellte Schale, die die untere Ansaugöffnung umgibt, die Ansaugöffnung aber frei läßt. Durch die Belebungsluft des Tauchbelüfters 114 entstehen Luftblasen im Wasser, von denen sich ein Teil in der beschriebenen Schale sammelt und von hier aus in die Leitung 126 eindringt. Die eindringende Luft unterbricht die geschlossene Wasserfüllung der Leitung 126. so daß das in der Leitung 126 enthaltene Wasser nach beiden Seiten ausläuft. Die Funktion als kommunizierende Röhre ist daher für den bereits angelaufenen Klärvorgang in der Kammer 96 ausgeschaltet. In der Behandlungskammer 26 wird weiter belüftet mit Hilfe des Tauchbelüfters. Dieser Phase, die beispielsweise sechs Stunden in Anspruch nimmt, folgt sodann eine Absetzphase, in der sich feste Teilchen absetzen können. Die Schlammpumpe 112 hat im übrigen die Funktion, von Zeit zu Zeit schlammhaltiges Abwasser aus der Kammer 96 in die Kammer 98 zurückzuführen.

Der Schlamm, der sich nach und nach in den beiden Kammern 98,100 absetzt, wird in regelmäßigen Zeitabständen entfernt und als Klärschlamm entsorgt, ggfs. weiterverwendet. Die Zeiten der Schlammrückführung in die Kammern 98,100 richten sich nach der Schmutzfracht, die in die Behandlungskammer 96 gelangt ist. Die Schlammpumpe fördert je Zyklus eine gleichbleibende Belebtschlammmenge in die Kammern 98,100.

Die gesamte Steuerung der Anlage erfolgt elektronisch und kann an den jeweiligen Bedarfsfall, insbesondere der anfallenden Abwassermenge angepaßt werden. Die Betriebszeit des Tauchbelüfters und der Klarwasserpumpe sowie die Betriebszeit der Schlammpumpe können jeweils gesondert eingestellt werden.

Da der Abpumpvorgang nur von kurzer Dauer ist, wird das gereinigte Wasser in einem Probenbehälter 120 gesammelt, so daß für den Probennehmer zu jeder Zeit repräsentatives Klarwasser zur Verfügung steht. Der Probenbehälter befindet sich in der Nähe der oberen Öffnung des Behälters und ist damit gut zugänglich. Alle Aggregate, die an dem Rahmen 110 angeordnet sind, können mit diesem Rahmen zu Prüfungs- und Wartungszwecken nach oben durch die Öffnung des Behälters entnommen werden.

Die erfindungsgemäße Vorrichtung eignet sich somit in besonderer Weise zur Ausrüstung von üblichen Dreikammerbehältern, jedoch nicht nur für diese. Sie kann daher beispielsweise auch mit Erfolg bei Anlagen mit mehreren getrennten Becken eingesetzt werden.

## Patentansprüche

1. Vorrichtung zum Behandeln von Abwasser in Kleinkläranlagen und kleinen Kläranlagen, die einen Klärbehälter (90) in der Form eines Mehrkammerbehälters mit inneren senkrechten Trennwänden (92,94) aufweisen, mit einer Anzahl von Aggregaten einschließlich eines Belüfters (114), einer Klarwasser-Entnahmepumpe (116) und einer Schlammpumpe (112), **dadurch gekennzeichnet, daß** an einem gemeinsamen Rahmen (110) angeordnet entweder der Tauchbelüfter (114) und die Klarwasser-Entnahmepumpe (116) oder der Tauchbelüfter (114) die Klarwasser-Entnahmepumpe (116) und die Schlaumpumpe sind, der von oben in den Klärbehälter (90) einsetzbar und aus diesem entnehmbar ist, und daß der Rahmen (110) sowie gegebenenfalls weitere Aggregate auf eine der Trennwände (92,40) des Klärbehälters aufsetzbar bzw. aufhängbar ist.

2. Vorrichtung nach Anspruch 1, **dadurch gekennzeichnet, daß** der Klärbehälter wenigstens eine Vorklärkammer (98,100) und wenigstens eine Behandlungskammer (96) aufweist und daß die Schlammpumpe (112) an der Trennwand (92) zwischen beiden auf der Seite der Behandlungskammer (96) angeordnet ist und mit einer Ausgangsleitung (126) über die Trennwand hinweg mit der Vorklärkammer (98,100) verbunden ist.

3. Vorrichtung nach Anspruch 2, **dadurch gekennzeichnet, daß** benachbart zu der Schlammpumpe (112) der Tauchbelüfter (114) angeordnet ist und daß an der Unterseite der Schlammpumpe eine nach unten offene Auffangschale vorgesehen ist, die nach oben mit der Ausgangsleitung (126) verbunden ist.

4. Vorrichtung nach einem der Ansprüche 1 bis 3, **dadurch gekennzeichnet, daß** von der Klarwasser-Entnahmepumpe (116) eine Leitung (118) in einen Probenbehälter (120) verläuft, dessen Überlauf mit dem Rohr (30) des Ablaufs verbunden ist.

## Claims

1. Apparatus for the treatment of waste water in small-scale clarification plants and small clarification plants which have a clarification container (90) in the form of a multi-chamber container with internal vertical dividing walls (92, 94), having a number of units including an aerator (114), a clarified water removal pump (116) and a sludge pump (112), **characterised in that** either the immersion aerator (114) and the clarified water removal pump (116) or the immersion aerator (114), the clarified water removal pump (116) and the sludge pump are arranged on a common frame (110) which, from above, can be inserted into the clarification container (90) and removed therefrom, and **in that** the frame (110) and optionally other units can be placed on or suspended from one of the dividing walls (92, 40) of the clarification container.

2. Apparatus according to claim 1, **characterised in that** the clarification container has at least one pre-clarification chamber (98, 100) and at least one treatment chamber (96), and **in that** the sludge pump (112) is arranged on the dividing wall (92) between the two on the side where the treatment chamber (96) is arranged, and is connected to the pre-clarification chamber (98, 100) by an outlet duct (126) in a manner extending beyond the dividing wall.

3. Apparatus according to claim 2, **characterised in that** the immersion aerator (114) is arranged adjacent to the sludge pump (112), and **in that** a collecting dish which is open at the bottom is provided on the lower side of the sludge pump and is connected at the top to the outlet duct (126).

4. Apparatus according to any one of claims 1 to 3, **characterised in that** a duct (118) extends from the clarified water removal pump (116) into a sample container (120), the overflow of which is connected to the pipe (30) of the discharge.

## Revendications

1. Dispositif pour traiter des eaux usées dans de petites installations d'épuration et des installations d'épuration de petite taille qui comportent une cuve d'épuration (90) sous la forme d'une cuve à plusieurs chambres avec cloisons (92, 94) intérieures verticales, comprenant un certain nombre de groupes, y compris un ventilateur (114), une pompe de prélèvement d'eau épurée (116) et une pompe à boues (112), **caractérisé en ce que** soit le ventilateur à immersion (114) et la pompe de prélèvement d'eau épurée (116) soit le ventilateur à immersion (114), la pompe de prélèvement d'eau épurée (116) et la pompe à boues sont disposés sur un châssis (110) commun qui peut être inséré depuis le haut dans la cuve d'épuration (90) et peut être prélevé de celle-ci, et **en ce que** le châssis (110) ainsi qu'éventuellement d'autres groupes peuvent être placés sur ou suspendus à l'une des cloisons (92, 40) de la cuve d'épuration.

2. Dispositif selon la revendication 1, **caractérisé en ce que** la cuve d'épuration comporte au moins une chambre de pré-épuration (98, 100) et au moins une chambre de traitement (96), et **en ce que** la pompe à boues (112) est disposée sur la cloison (92) entre elles deux, sur le côté de la chambre de traitement (96), et est reliée, par une conduite de sortie (126), au-delà de la cloison, à la chambre de pré-épuration (98, 100).

3. Dispositif selon la revendication 2, **caractérisé en ce qu'**au voisinage de la pompe à boues (112) est disposé le ventilateur à immersion (114), et **en ce que** sur le côté inférieur de la pompe à boues, est prévu un bac de collecte ouvert vers le bas qui est relié vers le haut à la conduite de sortie (126).

4. Dispositif selon l'une des revendications 1 à 3, **caractérisé en ce que** depuis la pompe de prélèvement d'eau épurée (116), une conduite (118) s'étend dans un récipient à échantillon (120) dont le trop-plein est relié au tube (30) de l'évacuation.
